# EUROPÄISCHE PATENTSCHRIFT

(11) **EP 2 456 586 B1**
(45) Veröffentlichungstag und Bekanntmachung des Hinweises auf die Patenterteilung: **13.03.2019**
(21) Anmeldenummer: 10728195.8
(22) Anmeldetag: 23.06.2010
(51) Int. Cl.: B23C 5/10, B23C 5/20

(54) **SCHNEIDEINSATZ FÜR EIN SCHNEIDWERKZEUG ZUR SPANENDEN BEARBEITUNG, INSBESONDERE ZUM HOCHVORSCHUBFRÄSEN**
CUTTING INSERT FOR A CUTTING TOOL FOR MACHINING BY CHIP REMOVAL, IN PARTICULAR FOR HIGH FEED MILLING
PLAQUETTE DE COUPE POUR UN OUTIL DE COUPE PERMETTANT UN ENLÈVEMENT PAR USINAGE, EN PARTICULIER UN FRAISAGE GRANDE AVANCE

(30) Priorität: 24.07.2009 DE 102009035754
(43) Veröffentlichungstag der Anmeldung: 30.05.2012
(73) Patentinhaber: Hartmetall-Werkzeugfabrik Paul Horn GmbH, 72072 Tübingen (DE)
(72) Erfinder: LUIK, Matthias, 72766 Reutlingen (DE)
(74) Vertreter: Witte, Weller & Partner Patentanwälte mbB
(86) Internationale Anmeldenummer: PCT/EP2010/058935
(87) Internationale Veröffentlichungsnummer: WO 2011/009687

(56) Entgegenhaltungen:
- EP-A1- 0 962 272
- DE-A1- 10 052 963
- US-A- 5 762 453
- US-A1- 2003 072 625
- US-A1- 2004 146 365
- US-A1- 2005 152 753
- US-B1- 7 040 844

## Beschreibung

Die vorliegende Erfindung betrifft einen Schneideinsatz für ein Schneidwerkzeug zur spanenden Hochvorschubfräsbearbeitung von Werkstücken, wobei das Schneidwerkzeug einen Halter mit einem Sitz zur Aufnahme des Schneideinsatzes aufweist, wobei der Schneideinsatz mindestens eine Schneidkante aufweist. Die vorliegende Erfindung betrifft ferner einen Halter für ein solches Schneidwerkzeug mit einem Sitz zur Aufnahme eines Schneideinsatzes sowie ein Schneidwerkzeug mit einem solchen Halter und einem in den Sitz des Halters eingesetzten Schneideinsatz, wobei die Schneidkante abschnittsweise drei unterschiedliche Krümmungsradien aufweist, wobei ein erster Abschnitt den kleinsten Radius, ein daran anschließender mittlerer zweiter Abschnitt den größten Radius und ein daran anschließender dritter Abschnitt einen zwischen kleinstem und größtem Radius liegenden mittleren Radius aufweist. Die Erfindung betrifft insbesondere einen Schneideinsatz und ein Schneidwerkzeug zum Hochvorschubfräsen.

Ein Schneideinsatz zum Stirnfräsen ist beispielsweise aus der WO 2005/039811 A1 bekannt. Dieser Schneideinsatz ist quadratisch ausgestaltet und weist vier Schneidkanten auf, wobei wenigstens eine der Schneidkanten konvex gekrümmt ist. Dadurch sollen sich insbesondere höhere Vorschubgeschwindigkeiten, geringere radiale Schneidkräfte und erhöhte Lebensdauern erreichen lassen.

Ein rautenförmiger Schneideinsatz ist aus der US 5,762,453 bekannt. Ein Schneideinsatz gemäß dem Oberbegriff des Patentanspruchs 1 ist aus der US 2003/0072625 A1 bekannt.

Der vorliegenden Erfindung liegt die Aufgabe zugrunde, einen Schneideinsatz und ein Schneidwerkzeug zu schaffen, mit denen sich im Vergleich zu bekannten Schneidwerkzeugen größere Schnitttiefen und höhere Vorschubgeschwindigkeiten, auch beim Eintauchen in ein Werkstück, erreichen lassen.

Die Aufgabe wird erfindungsgemäß durch einen in Patentanspruch 1 angegebenen Schneideinsatz gelöst.

Der Erfindung liegt die Erkenntnis zugrunde, dass beim Einsatz des Schneideinsatzes größere Schnitttiefen und höhere Vorschubgeschwindigkeiten erreicht werden, wenn die für die spanende Bearbeitung von Werkstücken im Einsatz befindliche Schneidkante des Schneideinsatzes nicht eine gerade oder gekrümmte Linie mit einem einzigen festen Radius ist, sondern abschnittsweise unterschiedliche Radien aufweist.

Der Abschnitt mit dem größten Radius, der insbesondere beim ebenen Fräsen zum Einsatz kommt, bewirkt zum einen eine gute Verteilung der Kräfte, zum anderen wirken die Kräfte in Achsrichtung und können daher besser aufgenommen werden. Der mittlere Radius kommt insbesondere beim Eintauchen zum tragen.

Bei den bekannten Schneideinsätzen muss, wenn das Schneidwerkzeug zum schrägen Eintauchen in ein Werkzeug benutzt wird, die Vorschubgeschwindigkeit gedrosselt werden. Beim ebenen Fräsen befindet sich direkt über der Schneidkante aufgrund des großen Radius relativ wenig Material über der Schneidkante. Daher sind die hohen Vorschubgeschwindigkeiten möglich. Beim schrägen Eintauchen ist bei einer geraden, steilen Kante schon bei kleinen Vorschüben relativ viel Material über der Schneide, weshalb der Vorschub verringert werden muss, da sonst die Belastung zu hoch wird, während dies bei dem erfindungsgemäßen Schneideinsatz nicht mehr erforderlich ist. Bei dem erfindungsgemäßen Schneideinsatz ist das nicht der Fall, da der beim Eintauchen zum Einsatz kommende Abschnitt der Schneidkante, also der Abschnitt mit dem mittleren Radius, zum einen durch den Radius eine längere Kante aufweist und somit die Kräfte besser verteilt, zum anderen sich bei den hier kleinen Eintauchwinkeln durch den Radius wenig Material senkrecht zur Schneide befindet, was verdrängt werden muss.

Ein weiterer Vorteil des erfindungsgemäßen Schneideinsatzes lässt sich bei Einsatz mindestens zweier an einem Halter angeordneter Schneideinsätze erreichen. Durch die Rotation eines solchen Schneidwerkzeugs beim Einsatz als Fräser ergibt sich somit ein sichelförmiger Span, und jeder dritte Schneidkantenabschnitt kommt mit dem Werkstück in Berührung, bis die Schnitttiefe erreicht ist und fährt dann aus dem Werkstück heraus. Dies ergibt sich aus der Rotation.

Bevorzugte Ausgestaltungen hinsichtlich der Größenverhältnisse der Abschnitte sowie der Radien zueinander sind in Unteransprüchen angegeben. Die konkrete Ausgestaltung der jeweiligen Größenverhältnisse hängt insbesondere von der gewünschten Anwendung des Schneideinsatzes ab. Bevorzugt ist vorgesehen, den größten Radius möglichst groß zu gestalten. In einer konkreten Ausgestaltung ist beispielsweise der größte Radius etwa vier- bis fünfmal größer als der mittlere Radius, der beispielsweise im Bereich von 5 mm liegt. Damit lässt sich eine Schnitttiefe von etwa 1,2 mm statt 1 mm wie bei bekannten Schneidwerkzeugen erreichen.

In einer Weiterbildung ist vorgesehen, dass sich an den dritten Abschnitt ein vierter Abschnitt anschließt, der einen kleineren Radius aufweist als der dritte Abschnitt, insbesondere denselben kleinsten Radius wie der erste Abschnitt. Eine solche Ausgestaltung ist insbesondere bei den erfindungsgemäßen Schneideinsätzen vorteilhaft, die eine dreieckförmige Oberseite aufweisen und an deren Seiten drei (identische) Schneidkanten angeordnet sind. Der jeweils kleinste Radius ist dann der Schneideckenradius, an dem zwei benachbarte Schneidkanten unterschiedlicher Dreiecksseiten aneinander grenzen.

Bevorzugt ist der Schneideinsatz in Form einer Schneidplatte ausgestaltet, deren Deckfläche parallel zu einer Bodenfläche des Schneideinsatzes verläuft. Die Schneidkanten verlaufen dabei vollständig in der Deckfläche, wodurch sich der Schneideinsatz einfacher herstellen lässt.

In einer Weiterbildung davon ist vorgesehen, dass jeweils zwischen Schneidkante und Bodenfläche eine schräg zur Bodenfläche verlaufende Seitenfläche vorgesehen ist. Die Schräge ist dabei bevorzugt so ausgestaltet, dass die Seitenfläche im Wesentlichen unter einem Seitenflächenwinkel im Bereich von 50° bis 90°, insbesondere im Bereich von 70° bis 80°, zur Bodenfläche verläuft. In einer konkreten Ausgestaltung ist beispielsweise ein Seitenflächenwinkel von 75° vorgesehen.

Bevorzugt sind ferner an der Seitenfläche mindestens eine Anlagefläche und eine Freifläche vorgesehen. Die Anlagefläche ist dabei bevorzugt eben ausgestaltet, grenzt an die Bodenfläche an und liegt im mittleren Bereich der Seitenfläche, bevorzugt ohne an die an diese Seitenfläche angrenzende Schneidkante anzugrenzen. Diese Anlagefläche dient zum Anlegen an eine korrespondierende Abstützfläche im Sitz des Halters, wenn die Schneidplatte als Wendeschneidplatte mit mehreren Schneidkanten ausgestaltet ist. Dadurch lässt sich eine sichere und positionsgenaue Lagefixierung des Schneideinsatzes im Halter erreichen.

Bevorzugt weist die Seitenfläche eine erste, an die Schneidkante angrenzende Freifläche und eine zweite, an die Bodenfläche, die Anlagefläche und die erste Freifläche angrenzende zweite Freifläche auf. Dies hat den Vorteil, dass der aus Spanfläche und Freifläche gebildete Schneidkeil stabiler wird. Bei nur einer Freifläche müsste diese unter einem großen Freiwinkel stehen, da Fräswerkzeuge ab einem Schneidkreisdurchmesser von 20 mm nicht auf der Freifläche aufsitzen dürfen. Bevorzugt weisen die beiden Freiflächen deshalb erfindungsgemäß unterschiedlich große Freiwinkel auf, wobei der Freiwinkel der zweiten Freifläche bevorzugt geringfügig größer ist als der Freiwinkel der ersten Freifläche.

Hinsichtlich des Krümmungsradius der Freiflächen ist ferner bevorzugt vorgesehen, dass die erste und zweite Freifläche denselben größten Krümmungsradius aufweisen wie der mittlere zweite Abschnitt der zugehörigen Schneidkante. Dies gewährleistet, dass der Schneideinsatz freilaufen kann und mit vertretbarem Aufwand hergestellt werden kann.

Ein weiterer Aspekt der vorliegenden Erfindung betrifft ein Schneidwerkzeug mit einem Schneideinsatz und einem entsprechenden Halter mit einem Sitz zur Aufnahme eines Schneideinsatzes gemäß der vorliegenden Erfindung. Dieser Halter ist dadurch gekennzeichnet, dass der Sitz derart in dem Halter ausgerichtet ist, dass die für die spanende Bearbeitung wirksame Schneidkante sich im Wesentlichen vom Außenumfang des Halters in Richtung des Zentrums des Halters erstreckt und, in Bezug auf eine senkrecht zur Längsachse des Halters verlaufende Querschnittsebene, schräg ansteigend vom Außenumfang in Richtung des Zentrums verläuft. Insbesondere ist ferner vorgesehen, dass der Sitz derart in dem Halter ausgerichtet ist, dass der am weitesten in Längsrichtung des Halters gesehen vorstehende Punkt der für die spanende Bearbeitung wirksamen Schneidkante zwischen dem Zentrum des Halters und der Mitte dieser Schneidkante liegt. Ferner weist der Sitz bevorzugt zwei unter einem Anlagewinkel, insbesondere von 120°, zueinander verlaufende, ebene Anlageflächen auf, und die Anlageflächen sind derart ausgerichtet, dass die Winkelhalbierende zwischen den Anlageflächen unter einem Verdrehwinkel im Bereich zwischen 1° und 20°, insbesondere im Bereich zwischen 3° und 10°, zur Längsachse des Halters verläuft. Erfindungsgemäß ist der Halter somit bevorzugt so ausgestaltet, dass die Schneidplatte, verglichen mit der üblichen Positionierung in dem Halter, leicht verdreht in dem Halter sitzt, was dazu beiträgt, eine - verglichen mit bekannten Werkzeugen derselben Art - höhere Schnitttiefe bzw. einen hohen Materialabtrag erzielbar ist.

Dadurch, dass erfindungsgemäß der Schneideinsatz verdreht in dem Halter sitzt und dass der größte Radius der bei der Bearbeitung wirksamen Schneidkante im vom Zentrum des Halters aus gesehen äußeren Bereich der Schneidkante liegt, verschiebt sich der Scheitelpunkt der Schneidkante etwas nach innen zum Zentrum des Halters, wodurch die höheren Schnitttiefen erreicht werden. Der Scheitelpunkt ist hier weniger relevant, durch das schräge Anstellen verschiebt sich die Schneidecke zusätzlich zum Radius noch in Achsrichtung nach hinten. Dadurch sind höhere Schnitttiefen möglich. Durch die Verschiebung des Scheitelpunktes Richtung Zentrum kann zusätzlich an der Hauptschneide ein sehr großer Radius angebracht werden(also der mittlere Abschnitt), was sich wiederum positiv auf die Belastung des Werkzeuges auswirkt. Je größer der Radius ausfällt, desto geringer ist die Belastung. Wird der Radius zu groß gewählt, wird die Schnitttiefe wieder geringer werdenweshalb der Schneideinsatz noch gedreht an dem Halter montiert wird. Die Erfindung wird nachfolgend anhand von Zeichnungen unter Bezugnahme auf die Erfindung nicht einschränkende Ausführungsbeispiele näher erläutert. Es zeigen:
- Fig. 1: unterschiedliche Ansichten eines erfindungsgemäßen Schneideinsatzes,
- Fig. 2: unterschiedliche Ansichten eines erfindungsgemäßen Halters,
- Fig. 3: unterschiedliche Ansichten eines erfindungsgemäßen Schneidwerkzeugs und
- Fig. 4: zwei Detailansichten des erfindungsgemäßen Schneidwerkzeugs im Einsatz bei zwei unterschiedlichen Bearbeitungsarten.

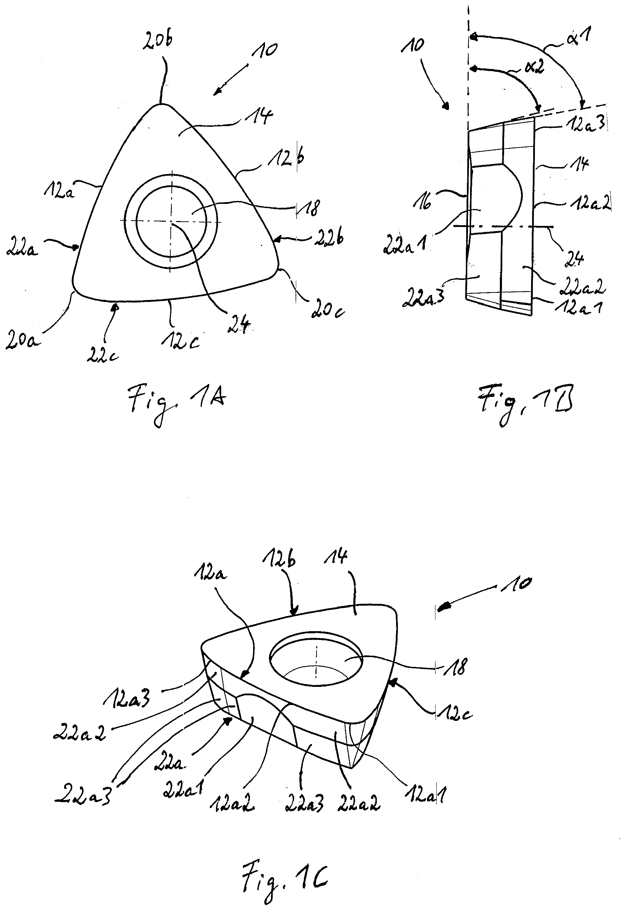

Fig. 1 zeigt ein Ausführungsbeispiel eines erfindungsgemäßen Schneideinsatzes 10, wobei Fig. 1A eine Draufsicht, Fig. 1B eine Seitenansicht und Fig. 1C eine perspektivische Ansicht zeigen. Der Schneideinsatz 10 ist bei diesem Ausführungsbeispiel als Wendeschneidplatte in Form eines (in der Draufsicht) gleichschenkligen Dreiecks mit drei Schneidkanten 12a, 12b, 12c ausgestaltet. Die Deckfläche 14 und die Bodenfläche 16 sind eben ausgestaltet und parallel ausgerichtet. Im Zentrum des Schneideinsatzes 10 befindet sich eine Durchgangsbohrung 18 mit zur Deckfläche 14 sich erweiterndem Querschnitt, durch die eine Klemmschraube (nicht gezeigt) hindurchgeführt werden kann zur Befestigung des Schneideinsatzes 10 an einem Halter, wie nachfolgend noch näher gezeigt werden wird.

Die Schneidkanten 12a, 12b, 12c verlaufen jeweils über die gesamte Länge der jeweiligen Dreieckseite zwischen den jeweils angrenzenden Schneidecken 20a, 20b, 20c, weisen jeweils abschnittsweise aber unterschiedliche Krümmungsradien auf. Dies soll anhand der Schneidkante 12a näher erläutert werden.

In einem ersten Abschnitt 12a1, der direkt bei der Schneidkante 20a beginnt, ist der Krümmungsradius am kleinsten und beträgt für eine solche dreieckförmige Wendeschneidplatte beispielsweise 0,8 mm. Dieser erste Abschnitt 12a1 ist der kleinste Abschnitt der Schneidkante 12a. Daran angrenzend liegt der größte zweite Abschnitt 12a2, der den größten Krümmungsradius aufweist. In einem Ausführungsbeispiel für eine gezeigte dreieckförmige Wendeschneidplatte 10 liegt dieser zweite Krümmungsradius beispielsweise bei 22,6 mm. Der dritte, an den zweiten Abschnitt 12a2 angrenzende Abschnitt 12a3 weist eine mittlere Länge und einen mittleren Krümmungsradius auf, der größenmäßig zwischen dem ersten und zweiten Krümmungsradius liegt, beispielsweise für einen gezeigten Schneideinsatz 10 bei 5 mm. Daran schließ sich die nächste Schneidkante 12b an, insbesondere dessen erster Abschnitt mit dem kleinsten Radius; dieser erste Abschnitt der Schneidkante 12b geht also direkt von dem dritten Abschnitt 12a3 der ersten Schneidkante tangential ab. Die weiteren Schneidkanten 12b und 12c sind grundsätzlich entsprechend aufgebaut wie die Schneidkante 12a; denkbar ist aber auch, die Schneidkanten für unterschiedliche Anwendungen unterschiedlich auszugestalten.

Die drei zwischen Deckfläche 14 und Bodenfläche 16 liegenden Seitenflächen 22a, 22b, 22c verlaufen, in Bezug auf eine durch die zentrische Bohrung 18 verlaufende Bohrungsachse 24 gesehen, schräg, wobei die Bodenfläche 16 insgesamt kleiner ist als die Deckfläche 14. Jede der Seitenflächen 22a, 22b, 22c weist dabei unterschiedliche Teilflächen auf, was anhand der Seitenfläche 22a näher erläutert werden soll.

Im Wesentlichen an die Bodenfläche 16 angrenzend ist eine ebene Anlagefläche 22a1 zur Anlage an eine korrespondierende Abstützfläche im Sitz des Halters vorgesehen. Zwischen dieser Abstützfläche 22a1 und dem mittleren Abschnitt 12a2 der Schneidkante 12a liegt eine erste gekrümmte Freifläche 22a2, die dem Schneidenverlauf folgt und im Wesentlichen unter einem ersten Freiflächenwinkel α1 zur Bodenfläche 16 verläuft. Dieser erste Freiflächenwinkel α1 beträgt beispielsweise 79°. Seitlich an die ebene Anlagefläche 22a1, an die Bodenfläche 16 und an die erste Freifläche 22a2 angrenzend ist eine zweite Freifläche 22a3 vorgesehen, die ebenfalls gekrümmt ist und dem Schneidenverlauf der Schneide 12a folgt. Diese zweite Freifläche 22a3 verläuft ebenfalls schräg zur Bodenfläche 16 unter einem zweiten Freiflächenwinkel α2, der etwas kleiner ist als der erste Freiflächenwinkel α1 und beispielsweise 75° beträgt. Diese Freiflächen sind somit umlaufend an allen Seitenflächen 22a, 22b, 22c angeordnet und nur jeweils durch die Anlageflächen unterbrochen.

Es versteht sich, dass die genannten Größenangaben für die verschiedenen Radien, Winkel und Abschnitte lediglich beispielhafte und den Schutzbereich nicht einschränkende Angaben sind. Wesentlich ist, dass der mittlere Abschnitt der jeweiligen Schneidkanten jeweils am längsten ist und den größten Krümmungsradius aufweist und dass der erste Schneidkantenabschnitt der kürzeste Abschnitt mit dem kleinsten Krümmungsradius ist. Bevorzugt ist der zweite Abschnitt 12a2 um den Faktor 2 bis 10, insbesondere 3 bis 5, größer als der dritte Abschnitt 12a3, und der dritte Abschnitt 12a3 ist bevorzugt um den Faktor 2 bis 10, insbesondere 2 bis 5, größer als der erste Abschnitt 12a1. Weiter ist bevorzugt der größte Krümmungsradius des zweiten Abschnitts 12a2 um den Faktor 2 bis 10, insbesondere 3 bis 5, größer als der mittlere Radius des dritten Abschnitts 12a3, und der mittlere Radius des dritten Abschnitts 12a3 ist bevorzugt um den Faktor 2 bis 15, insbesondere 5 bis 10, größer als der kleinste Radius des ersten Abschnitts 12a1. Die Seitenflächen 22a, 22b, 22c verlaufen allgemein unter Freiflächenwinkeln von 50° bis 90°, insbesondere im Bereich von 70° bis 80°, zur Bodenfläche 16.

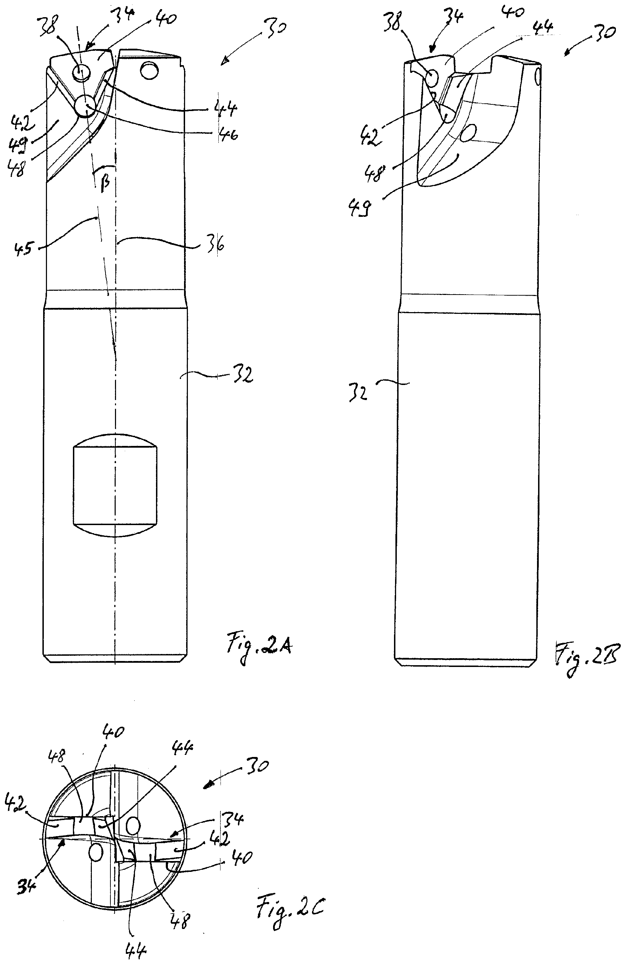

Fig. 2 zeigt ein Ausführungsbeispiel eines erfindungsgemäßen Halters 30 in unterschiedlichen Ansichten, wobei Fig. 2A eine Seitenansicht, Fig. 2B eine perspektivische Ansicht und Fig. 2C eine Draufsicht zeigen. Der Halter 30 ist in diesem Ausführungsbeispiel angepasst zur Aufnahme eines in Fig. 1 gezeigten Schneideinsatzes 10. Am werkstückseitigen Ende des Halterschaftes sind dazu stirnseitig zwei Ausnehmungen 34 als Sitz zur Aufnahme jeweils eines Schneideinsatzes 10 vorgesehen. Diese Ausnehmungen 34 sind punktsymmetrisch zur Längsachse 36 des Halters 30 angeordnet, so dass die beiden Schneideinsätze 10 abwechselnd durch Rotieren des Halters 30 zum Einsatz kommen. Zur Befestigung des Schneideinsatzes 10 in der Ausnehmung 34 mittels einer Klemmschraube ist etwa zentrisch in der Ausnehmung 34 jeweils eine Gewindebohrung 38 vorgesehen. Bei Befestigung des Schneideinsatzes 10 in der Ausnehmung 34 wird die Bodenfläche 16 des Schneideinsatzes 10 dann gegen die Bodenabstützfläche 40, die bevorzugt ebenfalls eben ausgestaltet ist, gepresst.

Die Ausnehmung 34 wird ferner begrenzt durch zwei Seitenabstützflächen 42, 44, die V-förmig zueinander verlaufen, eben ausgestaltet sind und leicht schräg zur Bodenabstützfläche 40 verlaufen, so dass sich also der Öffnungswinkel der Ausnehmung 34 zur Bodenabstützfläche 40 hin verjüngt. Diese Seitenabstützflächen 42, 44 stützen die jeweiligen Anlageflächen derjenigen Seitenflächen 22b, 22c des Schneideinsatzes 10 ab, deren zugehörige Schneidkanten 12b, 12c nicht im Einsatz sind.

Im unteren Bereich der Ausnehmung 34 weist die Bodenabstützfläche 40 eine Vertiefung 46 auf, und die Seitenabstützflächen 42, 44 gehen in eine halbrund gestaltete Aufweitung 48 über, so dass der Schneideinsatz 10 in diesem Bereich nicht abgestützt ist.

Der Bereich des Halters 30 vor den beiden Ausnehmungen 34 ist jeweils in üblicher Weise in einem großen Bereich 49 freigeschnitten

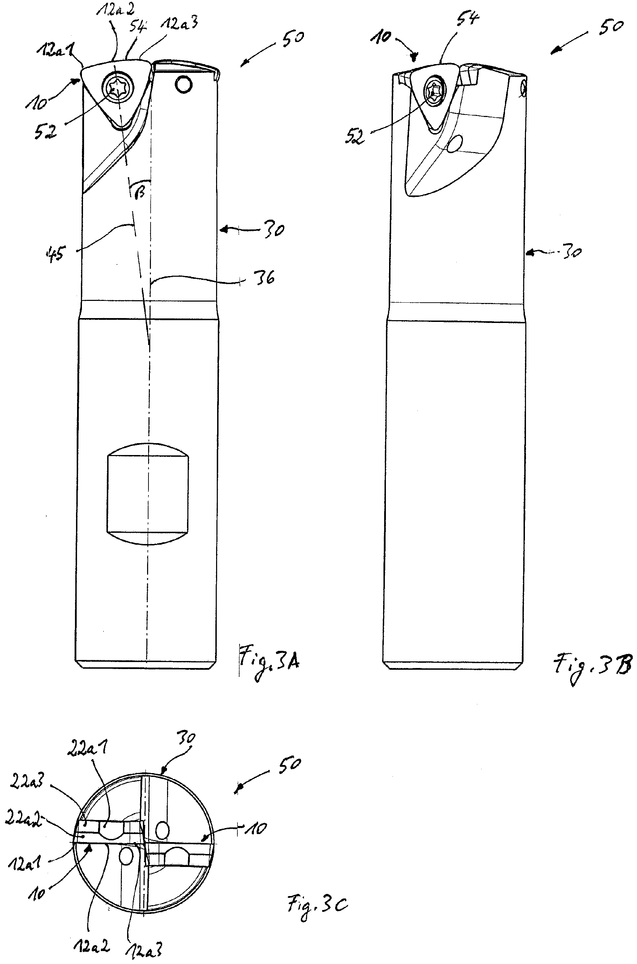

Fig. 3 zeigt ein Ausführungsbeispiel eines erfindungsgemäßen Schneidwerkzeugs 15, das durch einen in Fig. 2 gezeigten Halter 30 und zwei der in Fig. 1 gezeigten Schneideinsätze 10 sowie zwei Klemmschrauben 52 zur Befestigung der Schneideinsätze 10 an dem Halter 30 gebildet ist. Fig. 3A zeigt dabei eine Seitenansicht, Fig. 3B zeigt eine perspektivische Ansicht und Fig. 3C zeigt eine Draufsicht. Wie insbesondere Fig. 3C erkennen lässt, sind die beiden Schneideinsätze 10 punktsymmetrisch zur Längsachse 36 des Halters 30 angeordnet. Die Schneideinsätze 10 sind ferner so angeordnet, dass im Hinblick auf die für die Bearbeitung vorgesehene Schneidkante (beispielhaft sei dies die Schneidkante 12a) der erste Abschnitt 12a1 mit dem kleinsten Krümmungsradius ganz außen liegt, der zweite Abschnitt 12a2 mit dem größten Krümmungsradius in der Mitte liegt und der mittelgroße Abschnitt 12a3 mit dem Krümmungsradius mittlerer Größe ganz innen, jeweils in Bezug auf die zentrische Längsachse 36 des Halters 30, liegt.

Ferner sind die Ausnehmungen 34 in dem Halter 30, insbesondere deren Seitenabstützflächen 42, 44, derart angeordnet, dass die Schneideinsätze 10 jeweils leicht verdreht, in Bezug auf die Längsachse 36 und in der Seitenansicht (Fig. 3A) gesehen, angeordnet sind. Anders ausgedrückt, verläuft die Winkelhalbierende 45 (siehe Fig. 2A) zwischen den beiden Seitenabstützflächen 42, 44 nicht parallel zur Längsachse 36 des Halters, sondern um einen kleinen Verdrehwinkel β schräg dazu. Dieser Verdrehwinkel β liegt bei dem gezeigten Ausführungsbeispiel bei knapp 7°, wobei allgemein der Verdrehwinkel β im Bereich zwischen 1° und 20°, insbesondere im Bereich zwischen 3° und 10°, liegt. Dadurch wird erreicht, dass jeweils die im Einsatz befindliche Schneidkante (vorliegend die Schneidkante 12a) von der Seite betrachtet (Fig. 3A) vom Außenumfang des Halters in Richtung des Zentrums des Halters schräg ansteigend verläuft bis zu einem Scheitelpunkt 54, der noch im Bereich des zweiten Schneidkantenabschnitts 12a2 und kurz vor Beginn des dritten Schneidkantenabschnitts 12a3, also im Bereich zwischen Mitte der Schneidkante 12a und Mittezentrum des Halters 30 liegt. Von dort ab verläuft die Schneidkante 12a leicht schräg abfallend in Richtung des Zentrums des Halters.

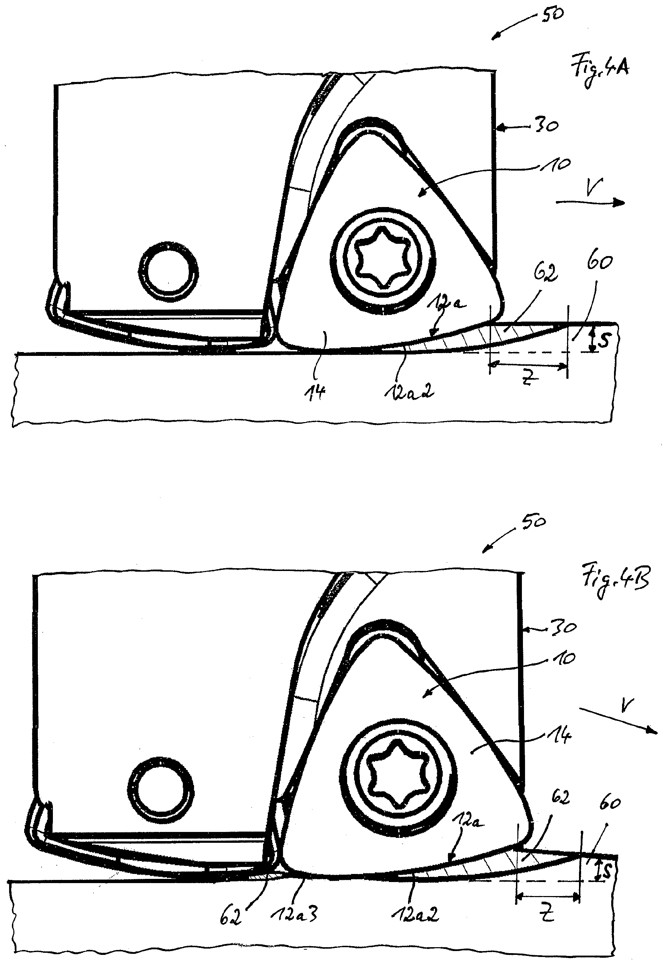

Durch diese Ausgestaltung des erfindungsgemäßen Schneideinsatzes sowie des erfindungsgemäßen Halters und die dadurch erreichte Anordnung der Schneideinsätze in den entsprechenden Ausnehmungen des Halters lässt sich das erfindungsgemäße Schneidwerkzeug 50 vorteilhaft zum Hochvorschubfräsen einsetzen. Auch beim schrägen Eintauchen in ein Werkzeug muss die Vorschubgeschwindigkeit, anders als bei bekannten Werkzeugen für eine derartige Bearbeitung, nicht deutlich herabgesetzt werden, und es lassen sich auch größere Schnitttiefen erzielen. Die soll anhand der zwei in Fig. 4 gezeigten Detailansichten des erfindungsgemäßen Schneidwerkzeugs im Einsatz bei zwei unterschiedlichen Bearbeitungsarten verdeutlicht werden.

Fig. 4A zeigt einen Einsatz des erfindungsgemäßen Schneidwerkzeugs 50 beim Planfräsen (ebenen Fräsen) eines Werkstücks 60. In Längsrichtung wird dabei ein kommafömiger Span 62 abgetragen. Dieser ist in Vorschubrichtung V relativ groß (Zahnvorschub Z). Senkrecht zur Schneidkante 12a und zur Deckfläche 14, und somit in Belastungsrichtung, ist der Span 62 dagegen verhältnismäßig klein. Je größer der Radius des hier zum Einsatz kommenden Abschnitts 12a2 der Schneidkante 12a ist, umso dünner ist auch das abgetragene Material des Werkstücks senkrecht zur Schneidkante 12a. Um dennoch auch eine ausreichende Schnitttiefe S zu erzielen, ist die Schneidplatte 12 und somit auch die Schneidkante 12a verdreht in dem Halter 30 montiert. Der Scheitelpunkt 54 wandert dadurch Richtung Zentrum des Halters 30. Somit ergibt sich hier der Vorteil eines sehr großen aktiven Radius, was zu einer geringen Belastung und langen Lebensdauer führt, wobei gleichzeitig durch die Schrägstellung eine ausreichend große Schnitttiefe erreicht wird.

Fig. 4B zeigt einen Einsatz des erfindungsgemäßen Schneidwerkzeugs 50 beim Tauchfräsen bzw. Hochvorschubfräsen (nicht ebenen Fräsen) eines Werkstücks 60. Durch den dritten Abschnitt 12a3 der aktiven Schneidkante 12a werden beim schrägen Eintauchen in das Werkstück 60 zwei kommaförmige kleine Späne 62 abgetragen. Bei beiden Schneidkantenabschnitten 12a2 und 12a3 befindet sich senkrecht zur Schneidkante 12a wenig Material über der Schneidkante 12a. Wäre der dritte Abschnitt 12a3 mit dem mittleren Radius nicht vorhanden, würde die Schneidkante 12a in diesem Bereich deutlich höher belastet, als dies bei dem erfindungsgemäßen Schneidwerkzeug der Fall ist. Dadurch müsste der Zahnvorschub Z reduziert werden, da sich ansonsten aufgrund der höheren Belastung die Lebensdauer des Schneideinsatzes deutlich verkürzen würde.

Die Erfindung ist nicht auf die gezeigten Ausführungsbeispiele beschränkt. Abgesehen von anderen Abmessungen kann auch eine andere Anzahl von Schneideinsätzen an dem Halter befestigt sein, und die Schneideinsätze können ebenfalls anders ausgestaltet sein. Auch die Ausgestaltung als Wendeschneidplatte mit drei Schneidkanten ist nicht zwingend erforderlich. Es kann auch nur jeweils eine Schneidkante bzw. zwei oder mehr als drei Schneidkanten vorgesehen sein. Hauptanwendungszweck des erfindungsgemäßen Schneidwerkzeugs ist das Hochvorschubfräsen. Hierunter versteht man das Fräsen mit höheren Zahnvorschüben als üblich. Im Normalfall größer ca. 0,5mm/Zahn.

Ein erfindungsgemäßes Schneidwerkzeug kann bevorzugt für Schruppbearbeitungen eingesetzt werden. Dabei kommt es darauf an, in kurzer Zeit möglichst viel Material zu zerspanen, die Oberfläche ist dabei zweitrangig. Die Fräser können dabei vielseitig eingesetzt werden wie z.B. zum Planfräsen, Taschenfräsen, Auskammern oder Tauchfräsen.

## Patentansprüche

1. Schneideinsatz (10) für ein Schneidwerkzeug (50) zur spanenden Hochvorschubfräsbearbeitung von Werkstücken, wobei das Schneidwerkzeug (50) einen Halter (30) mit einem (34) Sitz zur Aufnahme des Schneideinsatzes (10) aufweist, wobei der Schneideinsatz (10) eine entlang einer Bohrungsachse (24) verlaufende, zentrische Bohrung (18) sowie genau drei in einer Deckfläche (14) liegende Schneidkanten (12a, 12b, 12c) aufweist, wobei jede der drei Schneidkanten (12a, 12b, 12c) abschnittsweise drei unterschiedliche Krümmungsradien aufweist, und wobei der Schneideinsatz (10) 120°-drehsymmetrisch zu der Bohrungsachse (24) ist,
**dadurch gekennzeichnet, dass** ein erster Abschnitt (12al) den kleinsten Radius, ein daran anschließender mittlerer zweiter Abschnitt (12a2) den größten Radius und ein daran anschließender dritter Abschnitt (12a3) einen zwischen kleinstem und größtem Radius liegenden mittleren Radius aufweist, und wobei eine durch alle Schneidkanten verlaufende Umlauflinie der Deckfläche (14) ausschließlich konvex gekrümmt ist.

2. Schneideinsatz nach Anspruch 1,
**dadurch gekennzeichnet, dass** der zweite Abschnitt (12a2) der größte Abschnitt und der erste Abschnitt (12a1) der kleinste Abschnitt ist.

3. Schneideinsatz nach Anspruch 2,
**dadurch gekennzeichnet, dass** der zweiter Abschnitt (12a2) um den Faktor 2 bis 10, insbesondere 3 bis 5, größer ist als der dritte Abschnitt (12a3).

4. Schneideinsatz nach Anspruch 2,
**dadurch gekennzeichnet, dass** der dritte Abschnitt (12a3) um den Faktor 2 bis 10, insbesondere 2 bis 5, größer ist als der erste Abschnitt (12a1).

5. Schneideinsatz nach einem der vorstehenden Ansprüche,
**dadurch gekennzeichnet, dass** der größte Radius um den Faktor 2 bis 10, insbesondere 3 bis 5, größer ist als der mittlere Radius.

6. Schneideinsatz nach einem der vorstehenden Ansprüche,
**dadurch gekennzeichnet, dass** der mittlere Radius um den Faktor 2 bis 15, insbesondere 5 bis 10, größer ist als der kleinste Radius.

7. Schneideinsatz nach einem der vorstehenden Ansprüche ,
**dadurch gekennzeichnet, dass** sich an den dritten Abschnitt (12a3) ein vierter Abschnitt anschließt, der einen kleineren Radius aufweist als der dritte Abschnitt (12a3), insbesondere denselben kleinsten Radius wie der erste Abschnitt (12a1).

8. Schneideinsatz nach einem der vorstehenden Ansprüche ,
**dadurch gekennzeichnet, dass** die Schneidkante (12a', 12b, 12c) in einer Deckfläche (14) liegt, die parallel zu einer Bodenfläche (16) des Schneideinsatzes (10) verläuft.

9. Schneideinsatz nach Anspruch 8 ,
**dadurch gekennzeichnet, dass** jeweils zwischen Schneidkante (12a) und Bodenfläche (16) eine schräg zur Bodenfläche (16) verlaufende Seitenfläche (22a, 22b, 22c) vorgesehen ist.

10. Schneideinsatz nach Anspruch 9 ,
**dadurch gekennzeichnet, dass** die Seitenfläche (22a) eine an die Bodenfläche (16) angrenzende, im mittleren Bereich der Seitenfläche (22a) angeordnete Anlagefläche (22a1) zur Anlage an eine korrespondierende Abstützfläche (42, 44) im Sitz (34) des Halters (30) aufweist.

11. Schneideinsatz nach Anspruch 10,
**dadurch gekennzeichnet, dass** die Seitenfläche (22a) eine erste, an die Schneidkante (12a) angrenzende Freifläche (22a2) und eine zweite, an die Bodenfläche (16), die Anlagefläche (22a1) und die erste Freifläche (22a2) angrenzende zweite Freifläche (22a3) aufweist.

12. Schneidwerkzeug (50) mit einem Halter (30) mit mindestens einem Sitz (34) zur Aufnahme eines Schneideinsatzes (10) und mit einem in den Sitz (34) eingesetzten Schneideinsatz (10) nach einem der Ansprüche 1 bis 11,
wobei der Sitz (34) derart in dem Halter (30) ausgerichtet ist, dass die für die spanende Bearbeitung wirksame Schneidkante (12a) sich im Wesentlichen vom Außenumfang des Halters (30) in Richtung des Zentrums (36) des Halters (30) erstreckt und in Bezug auf eine senkrecht zur Längsachse (36) des Halters (30) verlaufende Querschnittsebene schräg ansteigend vom Außenumfang in Richtung des Zentrums (36) verläuft.

13. Schneidwerkzeug nach Anspruch 12, **dadurch gekennzeichnet, dass** der Sitz (34) derart in dem Halter (30) ausgerichtet ist, dass der am weitesten in Längsrichtung (36) des Halters (30) gesehen vorstehende Punkt (54) der für die spanende Bearbeitung wirksamen Schneidkante (12a) zwischen dem Zentrum (36) des Halters (30) und der Mitte dieser Schneidkante (12a) liegt.

14. Schneidwerkzeug nach Anspruch 12 oder 13, **dadurch gekennzeichnet, dass** der Sitz (34) zwei unter einem Anlagewinkel, insbesondere von 60°, zueinander verlaufende, ebene Anlageflächen (42, 44) aufweist und dass die Anlageflächen (42, 44) derart ausgerichtet sind, dass die Winkelhalbierende (54) zwischen den Anlageflächen (42, 44) unter einem Verdrehwinkel (B) im Bereich zwischen 1° und 20°, insbesondere im Bereich zwischen 3° und 10°, zur Längsachse (36) des Halters (30) verläuft.

## Claims

1. A cutting insert (10) for a cutting tool (50) for the chip-removing high feed milling machining of workpieces, the cutting tool (50) having a holder (30) with a seat (34) for receiving the cutting insert (10), the cutting insert (10) having a central bore (18) extending along a bore axis (24) and the cutting insert (10) having exactly three cutting edges (12a, 12b, 12c) lying in a covering surface (14), each of the three cutting edges (12a, 12b, 12c) having in portions three different radii of curvature, and the cutting insert (10) being 120° rotationally symmetric with respect to the bore axis (24),
**characterized in that** a first portion (12a1) having the smallest radius, a middle second portion (12a2) adjoining it having the largest radius, and a third portion (12a3) adjoining the latter having a medium radius lying between the smallest and the largest radius, and wherein a peripheral line, running through all the cutting edges, of the covering surface (14) is exclusively convexly curved.

2. The cutting insert as claimed in claim 1,
**characterized in that** the second portion (12a2) is the largest portion and the first portion (12a1) is the smallest portion.

3. The cutting insert as claimed in claim 2,
**characterized in that** the second portion (12a2) is larger than the third portion (12a3) by the factor 2 to 10, in particular 3 to 5.

4. The cutting insert as claimed in claim 2,
**characterized in that** the third portion (12a3) is larger than the first portion (12a1) by the factor 2 to 10, in particular 2 to 5.

5. The cutting insert as claimed in one of the preceding claims,
**characterized in that** the largest radius is larger than the medium radius by the factor 2 to 10, in particular 3 to 5.

6. The cutting insert as claimed in one of the preceding claims,
**characterized in that** the medium radius is larger than the smallest radius by the factor 2 to 15, in particular 5 to 10.

7. The cutting insert as claimed in one of the preceding claims,
**characterized in that** the third portion (12a3) has adjoining it a fourth portion which has a smaller radius than the third portion (12a3), in particular the same smallest radius as the first portion (12a1).

8. The cutting insert as claimed in one of the preceding claims,
**characterized in that** the cutting edge (12a', 12b, 12c) lies in a covering surface (14) which runs parallel to a bottom surface (16) of the cutting insert (10).

9. The cutting insert as claimed in claim 8,
**characterized in that** the cutting insert (10) has a plurality of, in particular three, cutting edges (12a, 12b, 12c), and **in that** in each case a side surface (22a, 22b, 22c) running obliquely to the bottom surface (16) is provided between cutting edge (12a) and bottom surface (16).

10. The cutting insert as claimed in claim 9,
**characterized in that** the side surface (22a) has a bearing surface (22a1), contiguous to the bottom surface (16) and arranged in the middle region of the side surface (22a), for bearing against a matching supporting surface (42, 44) in the seat (34) of the holder (30).

11. The cutting insert as claimed in claim 10,
**characterized in that** the side surface (22a) has a first flank (22a2) contiguous to the cutting edge (12a) and a second flank (22a3) contiguous to the bottom surface (16), to the bearing surface (22a1) and to the first flank (22a2).

12. A cutting tool (50) with a holder (30) with at least one seat (34) for receiving a cutting insert (10) and with a cutting insert (10) as claimed in one of claims 1 to 11 inserted into the seat (34),
wherein the seat (34) is oriented in the holder (30) in such a way that the cutting edge (12a) effective for the chip-removing machining extends essentially from the outer circumference of the holder (30) in the direction of the center (36) of the holder (30) and runs obliquely upward from the outer circumference in the direction of the center (36) with respect to a cross-sectional plane running perpendicularly to the longitudinal axis (36) of the holder (30).

13. The cutting tool as claimed in claim 12, **characterized in that** the seat (34) is oriented in the holder (30) in such a way that the point (54), projecting furthest, as seen in the longitudinal direction (36) of the holder (30), of the cutting edge (12a) effective for the chip-removing machining lies between the center (36) of the holder (30) and the middle of this cutting edge (12a).

14. The cutting tool as claimed in claim 12 or 13, **characterized in that** the seat (34) has two planar bearing surfaces (42, 44) running at a bearing angle, in particular of 60°, to one another, and **in that** the bearing surfaces (42, 44) are oriented in such a way that the bisecting line (54) between the bearing surfaces (42, 44) runs at an angle of rotation (B) in the range of between 1° and 20°, in particular in the range of between 3° and 10°, to the longitudinal axis (36) of the holder (30).

## Revendications

1. Plaquette de coupe (10) pour un outil de coupe (50) pour l'usinage par enlèvement de copeaux par fraisage à grande avance de pièces, l'outil de coupe (50) présentant un support (30) avec un siège (34) pour recevoir la plaquette de coupe (10), la plaquette de coupe (10) présentant un alésage central (18) s'étendant le long d'un axe d'alésage (24) et exactement trois arêtes de coupe (12a, 12b, 12c) situées dans une surface de recouvrement (14),
chacune des trois arêtes de coupe (12a, 12b, 12c) présentant en partie trois rayons de courbure différents, et la plaquette de coupe (10) ayant une symétrie de révolution sur 120° par rapport à l'axe d'alésage (24),
**caractérisée en ce qu'**une première portion (12a1) présente le plus petit rayon, une deuxième portion centrale s'y raccordant (12a2) présente le plus grand rayon et une troisième portion (12a3) s'y raccordant présente un rayon moyen situé entre le plus petit et le plus grand rayon, et
une ligne périphérique de la surface de recouvrement (14) s'étendant à travers toutes les arêtes de coupe étant munie d'une courbure exclusivement convexe.

2. Plaquette de coupe selon la revendication 1,
**caractérisée en ce que** la deuxième portion (12a2) est la plus grande portion et la première portion (12a1) est la plus petite portion.

3. Plaquette de coupe selon la revendication 2,
**caractérisée en ce que** la deuxième portion (12a2) est plus grande que la troisième portion (12a3) d'un facteur 2 à 10, en particulier d'un facteur 3 à 5.

4. Plaquette de coupe selon la revendication 2,
**caractérisée en ce que** la troisième portion (12a3) est plus grande que la première portion (12a1) d'un facteur 2 à 10, en particulier d'un facteur 2 à 5.

5. Plaquette de coupe selon l'une quelconque des revendications précédentes, **caractérisée en ce que** le plus grand rayon est plus grand que le rayon moyen d'un facteur 2 à 10, en particulier d'un facteur 3 à 5.

6. Plaquette de coupe selon l'une quelconque des revendications précédentes, **caractérisée en ce que** le rayons moyen est plus grand que le plus petit rayon d'un facteur 2 à 15, en particulier d'un facteur 5 à 10.

7. Plaquette de coupe selon l'une quelconque des revendications précédentes, **caractérisée en ce qu'**une quatrième portion se raccorde à la troisième portion (12a3), laquelle présente un plus petit rayon que la troisième portion (12a3), en particulier le même plus petit rayon que la première portion (12a1).

8. Plaquette de coupe selon l'une quelconque des revendications précédentes, **caractérisée en ce que** l'arête de coupe (12a', 12b, 12c) est située dans une surface de recouvrement (14) qui s'étend parallèlement à une surface de fond (16) de la plaquette de coupe (10).

9. Plaquette de coupe selon la revendication 8,
**caractérisée en ce qu'**à chaque fois entre l'arête de coupe (12a) et la surface de fond (16) est prévue une surface latérale (22a, 22b, 22c) s'étendant obliquement par rapport à la surface de fond (16).

10. Plaquette de coupe selon la revendication 9,
**caractérisée en ce que** la surface latérale (22a) présente une surface d'appui (22a1) adjacente à la surface de fond (16), disposée dans la région centrale de la surface latérale (22a) pour l'appui contre une surface de support correspondante (42, 44) dans le siège (34) du support (30).

11. Plaquette de coupe selon la revendication 10,
**caractérisée en ce que** la surface latérale (22a) présente une première surface libre (22a2) adjacente à l'arête de coupe (12a) et une deuxième surface libre (22a3) adjacente à la surface de fond (16), à la surface d'appui (22a1) et à la première surface libre (22a2).

12. Outil de coupe (50) comprenant un support (30) avec au moins un siège (34) pour recevoir une plaquette de coupe (10) et comprenant une plaquette de coupe (10) selon l'une quelconque des revendications 1 à 11 insérée dans le siège (34),
le siège (34) étant orienté dans le support (30) de telle sorte que l'arête de coupe (12a) active pour l'usinage par enlèvement de copeaux s'étende essentiellement depuis la périphérie extérieure du support (30) dans la direction du centre (36) du support (30) et s'étende par rapport à un plan en section transversale s'étendant perpendiculairement à l'axe longitudinal (36) du support (30) en montant obliquement depuis la périphérie extérieure dans la direction du centre (36).

13. Outil de coupe selon la revendication 12, **caractérisé en ce que** le siège (34) est orienté dans le support (30) de telle sorte que le point (54) saillant le plus loin, vu dans la direction longitudinale (36) du support (30), de l'arête de coupe (12a) active pour l'usinage par enlèvement de copeaux, soit situé entre le centre (36) du support (30) et le milieu de cette arête de coupe (12a).

14. Outil de coupe selon la revendication 12 ou 13, **caractérisé en ce que** le siège (34) présente deux surfaces d'appui planes (42, 44) s'étendant l'une par rapport à l'autre suivant un angle d'appui, en particulier de 60°, et **en ce que** les surfaces d'appui (42, 44) sont orientées de telle sorte que la bissectrice de l'angle (54) entre les surfaces d'appui (42, 44) s'étende suivant un angle de rotation (B) de l'ordre de 1° à 20°, en particulier de l'ordre de 3° à 10°, par rapport à l'axe longitudinal (36) du support (30).
